# EUROPÄISCHE PATENTANMELDUNG

(11) **EP 3 531 326 A1**
(43) Veröffentlichungstag der Anmeldung: **28.08.2019**
(21) Anmeldenummer: 19158203.0
(22) Anmeldetag: 20.02.2019
(51) Int. Cl.: G06F 21/55, H04L 9/32

(54) **VERFAHREN ZUM BETREIBEN EINES NETZWERKS MIT MEHREREN SERVERN**

(30) Priorität: 26.02.2018 DE 102018001496
(71) Anmelder: Diehl Defence GmbH & Co. KG, 88662 ÜBERLINGEN (DE)
(72) Erfinder: Koltes, Andreas, 88662 Überlingen (DE); Selz, Andre, 88662 Überlingen (DE); Gagel, Florian, 88690 Uhldingen-Mühlhofen (DE); Kushauer, Jörg, 88693 Deggenhausertal (DE)
(74) Vertreter: Diehl Patentabteilung

(57) **Zusammenfassung**

Die Erfindung betrifft ein Verfahren zum Betreiben eines Netzwerks (2, 8) mit mehreren Servern (14).

Um eine unbefugte Datenmanipulation im Netzwerk zuverlässig zu erkennen, wird vorgeschlagen, dass Eingaben von einem Bedienerclient (10) an einen der Server (14) und daraus folgende Eingabeaktivitäten im Netzwerk (2, 8) protokolliert werden, die Protokolldaten in eine Blockkette (26, 34) eingetragen werden, die auf mehrere räumlich getrennte Blockhosts (4, 12) des Netzwerks (2, 8) verteilt wird, und die Protokolldaten auf Inhalte, die auf eine Manipulation des Netzwerks (2, 8) hindeuten, überprüft werden.

## Beschreibung

Die Erfindung betrifft ein Verfahren zum Betreiben eines Netzwerks mit mehreren Servern.

In elektronischen Netzwerken sind häufig Informationen enthalten, die nur einem zuvor festgelegten Personenkreis zugänglich gemacht werden sollen. Je nach Vertraulichkeitsgrad der im Netzwerk enthaltenen Informationen kann die Sicherheit des Netzwerks entsprechend eingerichtet werden. Hierfür liefern die Common Criteria for Information Technology Security Evaluation einen internationalen Standard zur Prüfung und Bewertung der Sicherheitseigenschaften von IT-Produkten, insbesondere von Netzwerken. Ein älterer Standard sind die Trusted Computer System Evaluation Criteria, im Allgemeinen auch als Orange Book bekannt.

Trotz erhöhter Sicherheitsvorkehrungen kann nicht ausgeschlossen werden, dass ein Einbruch in ein geschütztes Netzwerk erfolgt und Informationen entnommen oder manipuliert werden. Um dies jedoch zumindest im Nachhinein zu erkennen, können sicherheitsrelevante Vorgänge protokolliert werden. Anhand der Protokolle kann nun im Nachhinein festgestellt werden, welcher Benutzer zu welchem Zeitpunkt welche Änderungen an den Informationen im Netzwerk vorgenommen hat.

Es ist eine Aufgabe der vorliegenden Erfindung, ein Verfahren zum Betreiben eines Netzwerks mit mehreren Servern anzugeben, mit dem eine unbefugte Datenmanipulation im Netzwerk erkannt werden kann.

Diese Aufgabe wird durch ein Verfahren der eingangs genannten Art gelöst, bei dem erfindungsgemäß Eingaben von einem Bedienerclient an einen Server und daraus folgende Eingabeaktivitäten im Netzwerk protokolliert werden, die Protokolldaten in eine Blockkette eingetragen werden, die auf mehrere räumlich getrennte Blockhosts des Netzwerks redundant verteilt wird, und die Protokolldaten auf Inhalte, die auf eine Manipulation des Netzwerks hindeuten, überprüft werden.

Die Erfindung geht von der Überlegung aus, dass ein Einbruch in ein Netzwerk verschleiert werden kann, wenn auch die Protokolldaten nachträglich manipuliert werden. Um einem Einbruch auf die Spur zu kommen und nachfolgende Datenmanipulationen zu verhindern, ist es daher sinnvoll, eine Manipulation der Protokolldaten zu erschweren. Durch Eintragung der Protokolldaten in die Blockkette, die auf mehrere räumlich getrennte Blockhosts verteilt ist, kann einer Manipulation der Protokolldaten entgegengewirkt werden.

Die Blockkette bildet insofern eine Datenbank, die bei mehreren Teilnehmern des Netzwerks gespeichert ist. Hierbei kann die gesamte Datenbank bei allen oder einigen Teilnehmern gespeichert sein. Sinnvoll ist es, wenn sie für einen vorbestimmten Teilnehmerkreis, insbesondere für alle Teilnehmer einsehbar ist. Auf diese Weise können die Teilnehmer durch Zugriff auf die Datenbank frühere Protokolldaten nachvollziehen.

Eine solche Aneinanderreihung von Datenblöcken ist aus der Blockchain-Technologie bekannt. Die Blöcke der Blockkette sind beispielsweise miteinander vernetzt. Diese Vernetzung erfolgt nicht nur durch das Aneinanderhängen, sondern dadurch, dass der Inhalt eines oder mehrerer, insbesondere aller vorangegangener Blöcke zu einem Prüfcode zusammengefasst im nächstfolgenden Block abgelegt ist, beispielweise im Header des nachfolgenden Blocks. Der Prüfcode kann ein Hashwert sein, der aus dem Inhalt des oder der vorangegangenen Blöcke gebildet ist.

Die Verwendung der Blockchain-Technologie eröffnet die Möglichkeit, die in den Blöcken gespeicherten Daten gegen eine unbefugte nachträgliche Änderung zu schützen. Hierzu können mehrere Blockketten auf Übereinstimmung geprüft werden. Bei Diskrepanzen kann die Quelle der Änderungen erkannt und suspendiert werden, sodass die Sicherheit des Netzwerks erhöht werden kann. Die Prüfung der Protokolldaten innerhalb der Blöcke auf Informationen, die auf eine Manipulation hindeuten, dient ebenfalls dazu, eine Manipulationsquelle zu erkennen und dann ggf. vom Netzwerk auszuschließen, sodass die Sicherheit des Netzwerks ebenfalls erhöht wird.

Ein Host oder Hostrechner kann ein in das Netzwerk eingebundener Computer mit einem Betriebssystem und zumindest einer Serversoftware sein. Ein Server oder eine Serversoftware kann ein Dienst sein, der zumindest einen von außen auf den Host zugreifenden Client mit Informationen bedient. Ein Host mit einem Server kann als Serverhost bezeichnet werden und ein Host, auf dem eine Blockkette abgelegt ist, als Blockhost. Ein Serverhost kann auch ein Blockhost sein und umgekehrt, wobei es sinnvoll ist, die Protokolldaten vom Serverhost auf einen physikalisch getrennten Blockhost zu übertragen, also auf einen anderen, räumlich getrennten Computer. Hierdurch kann die Sicherheit gegen Manipulation erhöht werden, da mit einem Einbruch in den Serverhost nicht unbedingt auch ein Einbruch in den Blockhost erfolgt. Es ist jedoch auch möglich, die Protokolldaten auf dem Serverhost zu belassen.

Eingaben vom Bediener an den Server können Daten sein, die aufgrund der Eingabe des Bedieners am Client an den Server gehen. Diese Eingaben können den Server dazu veranlassen, Informationen im Server zu verändern und/oder Transaktionen zu einem anderen Server und/oder Serverhost vorzunehmen. Solche Aktivitäten können als aus den Eingaben folgende Eingabeaktivitäten im Netzwerk bezeichnet werden.

Die Protokollierung der Eingaben und/oder Eingabeaktivitäten im Netzwerk erfolgt zweckmäßigerweise durch den Server, auf dem die Eingabe beziehungsweise die Eingabeaktivität erfolgt. Die Protokollierung kann Logdaten umfassen und auch die Eingaben beziehungsweise Eingabeaktivitäten als solche, beispielsweise als Tastatureingaben und/oder Inhalte von Dateien. Besonders vorteilhaft ist es, wenn die u. a. zuvor genannten Daten, Eingaben bzw. Inhalte von Dateien als Hashwerte protokolliert werden. Eine Protokollierung in Form von Hashwerten erlaubt eine Nachweisbarkeit von Manipulationen - ohne dass jedoch der konkrete Inhalt und/oder die Information als solche offenbart werden muss. Eine Manipulation kann jede unbefugte Aktion im Netzwerk sein, also eine solche Aktion, die beispielsweise von einem Netzwerkadministrator als unbefugt klassifiziert wird. Insbesondere umfasst eine Manipulation eine Veränderung von Protokolldaten im Netzwerk.

Die Protokolldaten können in Blöcke eingeschrieben werden und diese können geschlossen werden und an die Blockkette angehängt werden. Die Veröffentlichung von neu erstellten beziehungsweise neu geschlossenen Blöcken erfolgt zweckmäßigerweise per Broadcast im gesamten Netzwerk oder einem Teil des Netzwerks, beispielsweise an alle im Netzwerk vorhandenen Blockhosts. Um eine nachträgliche Manipulation von Protokolldaten zu erkennen, können die mehreren im Netzwerk redundant vorhandenen Blockketten auf Übereinstimmung überprüft werden. Dies kann durch einen oder mehrere der Blockhosts geschehen. Zweckmäßigerweise erfolgt eine Authentifizierung der Blockhosts beziehungsweise deren Blockserver gegenseitig über asymmetrische Verschlüsselung, insbesondere über Public-/Privatekeys.

Unabhängig davon werden die Protokolldaten auf Manipulationsinhalte überprüft. Dies kann durch einen oder mehrere Kontrollserver im Netzwerk erfolgen, die auf einem oder mehreren der Blockhosts oder einem oder mehreren anderen Hosts vorhanden sein können. Möglich ist auch eine manuelle Überprüfung durch einen Systemadministrator.

Bei Erkennung von Manipulationsinhalten oder Differenzen zwischen zwei Blockketten wird zweckmäßigerweise eine Alarmaktion ausgelöst, beispielsweise von einem der Blockhosts. Eine Alarmaktion kann das Herunterfahren des gesamten Netzwerks sein. Eingaben oder Datenänderungen innerhalb des Netzwerks können hierdurch verhindert werden. Das Netzwerk ist zweckmäßigerweise so eingerichtet, dass es nur in einem abgesicherten Modus wieder hochgefahren werden kann, insbesondere ausschließlich durch einen Systemadministrator.

Das Netzwerk ist vorteilhafterweise ein nach außen abgeschirmtes Netzwerk, bei dem sich jeder auf das Netzwerk Zugreifende, also ein Bediener oder ein außerhalb des Netzwerks liegender Computer, durch einen individuellen Login mit Passwort und Authentifizierungsmechanismus ausweisen muss. Sicherheitsrelevante Vorgänge werden zweckmäßigerweise protokolliert. Daten verschiedener Benutzer sind vorteilhafterweise getrennt voneinander. Das Netzwerk kann insofern ein nach TCSEC kategorisiertes Netzwerk der Sicherheitsstufe C2 oder höher sein. Die Abschirmung kann außerdem so ausgeführt sein, dass ein Zugriff auf das Netzwerk vom Internet aus generell blockiert ist und nur von einem Client innerhalb eines anderen geschlossenen Netzwerks aus durchführbar ist, beispielsweise von einem Intranet aus. Das Intranet kann durch einen Benutzerlogin geschützt sein. Zum Einbruch vom Internet aus in das Netzwerk müsste zuerst in das Intranet eingebrochen und dort Kontrolle über einen Client erlangt werden. Vom Client müsste dann ein unberechtigter Zugriff in das Netzwerk hinein erfolgen.

Ein weiterer Schutz kann erreicht werden, wenn das Netzwerk physisch so weit vom Bediener abgeschirmt ist, dass ihm der Zutritt zu den Blockhosts, insbesondere zu allen Hosts des Netzwerks, verwehrt ist. Der Bediener greift zweckmäßigerweise von außerhalb des Netzwerks auf dieses zu, beispielsweise durch eine VPN-Verbindung. Allgemein gesprochen ist es vorteilhaft, wenn sämtliche reguläre Bedienerclients außerhalb des Netzwerks liegen. Ein Herunterladen von Dateien kann hierdurch erschwert beziehungsweise unterbunden werden.

In einer vorteilhaften Ausführungsform der Erfindung umfassen die Protokolldaten Logdaten zu einem Ein- und Ausloggen des Bedienerclients. Auch die Logdaten zu einem Zugriff auf eine Datei, zu einem Verschieben einer Datei und/oder einem Verändern einer Datei sind sinnvoll. Umfassen die Protokolldaten eine Eigenschaft einer Datei beziehungsweise Eigenschaftsdaten einer Datei, so kann darauf rückgeschlossen werden, wie eine Datei verändert wurde. Die Eigenschaft kann der Inhalt oder ein Teil des Inhalts der Datei sein, eine Länge oder eine andere charakterisierende Größe der Datei. Dies kann beispielsweise ein Hashwert der Datei vor und nach einer Veränderung der Datei sein. Beispielsweise läuft auf dem den Server hostenden Hosts ein Dienst, der den Hashwert von veränderten Dateien ausgibt. Ebenfalls ist es vorteilhaft, Eingaben des Bedieners beziehungsweise dessen Bedienerclients während seiner Tätigkeit im Netzwerk zu protokollieren, beispielsweise Tastatureingaben oder Charakteristika von Mausklicks. Auch das Protokollieren von ausgeführten Programmen und/oder ins Netzwerk eingebrachte Daten, beispielsweise vom Intranet oder dem Internet in das Netzwerk. Die Protokolldaten umfassen praktischerweise eine oder mehrere der zuvor genannten Daten. Besonders geschickt ist es, wenn anstelle einer oder aller dieser Daten nur Hashwerte dieser Daten protokolliert werden.

Bei einer Protokollierung des Inhalts einer Datei ist die Erfindung besonders gut geeignet zur Absicherung eingestufter Daten, beispielsweise eines Kriegswaffenbuchs. Eingaben vom Bedienerclient in einem Kriegswaffenbuch, das beispielsweise vom Server bereitgestellt wird, können protokolliert werden, wie auch das Kriegswaffenbuch an sich oder nur Inhalte daraus. Zweckmäßigerweise wird jeder Eintrag im Kriegswaffenbuch in einer Blockkette festgehalten. So kann ein Kriegswaffenbuch digital als oder in einer Blockchain beziehungsweise Blockkette geführt werden und auf diese Weise vor Manipulation geschützt werden. Der Bediener einer Waffe und an der Waffe durchgeführte Aktionen können sehr sicher dokumentiert werden und vor einer nachträglichen Veränderung geschützt werden. Auch das Einbinden einer staatlichen Stelle derart, dass sie einen der Blockhosts stellt, ist sinnvoll, da die Stelle hierdurch ständigen Zugriff auf die Blockkette und damit die Information des Kriegswaffenbuchs hat.

In einer weiteren vorteilhaften Ausgestaltung der Erfindung erfolgt die Protokollierung durch Syslog. Hierbei ist es vorteilhaft, den Dienst des Syslog so zu modifizieren, dass auch Dateiveränderungen protokolliert werden, beispielsweise durch die Einbindungen eines Dienstes zur Erzeugung von Hashwerten. Auch sollten Dateizugriffe von Syslog protokolliert werden, also Zugriffe des Bedienerclients auf Dateien und Zugriff von netzwerkeigenen Diensten auf den Server. Bei einem hohen Logdatenvorkommen ist es sinnvoll, nur sicherheitsrelevante Logdaten zu protokollieren, beispielsweise nur die zwei, drei oder vier höchsten Stufen des Syslog, insbesondere zusammen mit einbruchsrelevanten Logs.

Um zu verhindern, dass bereits der Server, auf den der Eingriff des Benutzerclients erfolgte, manipulierte Protokolldaten erzeugt, ist es vorteilhaft, wenn die Protokollierung im Kernel des Serverhosts implementiert ist.

Ebenfalls zur Vorbeugung von manipulierten Protokolldaten ist es vorteilhaft, wenn die Protokolldaten unmittelbar nach der Eingabe des Bedienerclients am Server vom Server an den Blockhost geschickt werden. Die Unmittelbarkeit kann gewährt sein, wenn das Erzeugen der Protokolldaten und deren Versenden an den Blockhost in einem unterbrechungsfreien Vorgang erfolgt, insbesondere in einem Vorgang, der weder durch den Bedienerclient noch durch ein regulär laufendes Programm im Netzwerk unterbrochen werden kann.

Wird durch einen Unbefugten die Kontrolle über einen Server des Netzwerks erlangt und schreibt dieser seine Protokolldaten selbst in einen Block, so besteht die Möglichkeit, die Daten im Block vor dem Schließen des Blocks und vor seinem Anhängen an die Blockkette zu verändern. Um dies zu verhindern ist es sinnvoll, wenn die Protokolldaten ausschließlich auf einem anderen Host in einem Block eingefügt werden beziehungsweise in die Blockkette eingetragen werden, als auf dem Serverhost, in dem die Protokolldaten erzeugt wurden. Zweckmäßigerweise werden die Protokolldaten verschlüsselt vom Serverhost zum Blockhost geschickt, insbesondere SSL-verschlüsselt.

Zwischen dem Erzeugen der Protokolldaten und deren Einfügen in die Blockkette kann ein gewisser Zeitraum vergehen, während dem die Protokolldaten nur unzureichend gegen Manipulation geschützt sind. Ein gewisser Schutz kann zwar das unmittelbare Absenden an den Blockhost nach deren Erzeugung im Serverhost sein. Wenn jedoch auch dieser gekapert wurde, steht der Datenmanipulation kein Hindernis mehr im Weg. Um dies zu vermeiden, ist es sinnvoll, wenn die Protokolldaten vom Server an eine Gruppe aus mehreren Blockhosts verschickt werden. Erst nach diesem Verschicken werden die Protokolldaten von zumindest einem der Blockhosts in einen Block eingefügt und dieser wird in die Blockkette angehängt. So lange die Protokolldaten nicht bei allen dieser Blockhosts manipuliert werden, kann deren Manipulation nachträglich noch erkannt werden. Die Protokolldaten werden insofern außerhalb eines Blocks vom Server an die Blockhosts verschickt. Eine Verteilung der Protokolldaten kann hierdurch zweifach erfolgen: als noch nicht in einer Blockkette gesicherte Protokolldaten vom Server an die Blockhosts und von dem Blockhost, der sie in einen Block eingeschrieben und in die Blockkette eingefügt hat, im Broadcast an weitere Blockhosts.

Die Gruppe der Blockhosts, an die der Server seine Protokolldaten verschickt, kann eine andere sein, als diejenigen Blockhosts, an die die Blockkette redundant verteilt wird. Insbesondere ist die Gruppe eine Untergruppe aller Blockhosts.

Vorteilhafterweise sind die Blockhosts zueinander heterogene Einheiten, insbesondere die Blockhosts der Gruppe. Die Einheiten können eine Workstation, ein PC oder eine virtuelle Maschine sein, zweckmäßigerweise haben die Einheiten verschiedene Betriebssysteme.

Zumindest ein Blockhost der Gruppe kann außerhalb des Netzwerks liegen, zum Beispiel in einem Intranet oder sogar in einer internetbasierten Cloud. Sinnvoll ist, dass zumindest ein Blockhost, zweckmäßigerweise mehrere Blockhosts, innerhalb des Netzwerks liegen.

Sind mehrere Protokolldaten erzeugende Server im Netzwerk vorhanden, können diese ihre Protokolldaten alle an die gleiche Gruppe Blockhosts schicken. Um die Nachverfolgung der Protokolldaten für Unbefugte zu erschweren, ist es jedoch sinnvoll, wenn die Zusammensetzung der Gruppe von Blockhosts verändert wird. Beispielsweise können mehreren Protokolldaten erzeugenden Servern jeweils eine Gruppe von Blockhosts zugewiesen werden, wobei die Gruppen untereinander verschieden sind. Zur Verschleierung der Protokolldaten ist es insofern sinnvoll, wenn mehrere Server des Netzwerks jeweils ihre Protokolldaten jeweils an eine Gruppe mit mehreren Blockhosts senden und die Gruppe von Server zu Server eine andere ist. Jeder Server verschickt hierbei zweckmäßigerweise ausschließlich die von ihm erzeugten Protokolldaten. Hierbei müssen nicht alle vom Server erzeugten Protokolldaten verschickt werden.

Ebenfalls möglich ist eine zeitliche Veränderung, sodass dem Protokolldaten erzeugenden Server in regelmäßigen oder unregelmäßigen Zeitabständen eine neue Gruppe von Blockhosts zugewiesen wird, an die er seine Protokolldaten verschickt. Ebenfalls möglich und sinnvoll ist es, dass die Zusammensetzung zufällig zusammengestellt wird, beispielsweise mithilfe der Verwendung eines Zufallsgenerators.

Die Rechte zum Schließen beziehungsweise Anhängen eines Blocks an die Blockkette können nach einem geeigneten Algorithmus an einen oder mehrere Blockhosts vergeben werden. Insbesondere in einem abgeschlossenen Netzwerk kann hierbei so verfahren werden, dass ein Blockhost einen Block schließt und an die Blockkette anhängt, sobald ihm genügend Protokolldaten zum Füllen des Blocks vorliegen. Zweckmäßigerweise sind diese genügenden Protokolldaten in der aktuellen Blockkette noch nicht enthalten. Ein gesondertes Recht zum Erzeugen beziehungsweise Anhängen eines Blocks ist hierbei nicht notwendig. Bei Veröffentlichung eines neuen Blocks der Kette kann jeder Blockhost prüfen, welche seiner Protokolldaten im neuen Block enthalten sind. Er kann diese Protokolldaten aus seinem Protokolldatenspeicher löschen beziehungsweise markieren, damit diese nicht mehr in einen weiteren Block eingefügt werden.

Eine weitere Absicherung des Netzwerks gegen Protokolldatenmanipulation kann erreicht werden, wenn das Netzwerk einen Eingabebereich mit Hosts aufweist, auf die der Bediener oder mehrere Bediener Zugriff haben, und einen Systemadministratorenbereich, auf den ausschließlich Systemadministratoren Zugriff haben, und zumindest ein Blockhost im Systemadministratorenbereich liegt.

Die Erfindung ist besonders geeignet für ein Netzwerk, das über eine Sicherheit der normierten Stufe C2 verfügt. Zweckmäßigerweise ist das Netzwerk über eine Datenkopplung mit einem vom Internet aus zugänglichen weiteren, offeneren Netzwerk verbunden. Über diese Datenkopplung können Daten in das Netzwerk eingespeist werden. Die Datenkopplung ist zweckmäßigerweise eine Einbahnkopplung in Richtung des Netzwerks. Es können Daten, insbesondere Protokolldaten aus dem offeneren Netzwerk in das geschlossenere Netzwerk übertragen werden beispielsweise in bereits geschlossene beziehungsweise an eine Blockkette angehängte Blöcke. Die Protokolldaten aus dem zugänglichen weiteren Netzwerk sind im geschlosseneren Netzwerk sicher vor Datenmanipulation, sodass auch Vorgänge im zugänglichen weiteren Netzwerk einer späteren Prüfung unterzogen werden können. Eine vollständige Übernahme der Blockkette aus dem weiteren zugänglichen Netzwerk kann so unterbunden werden. Im geschlosseneren Netzwerk können mithin zwei Blockketten vorliegen, eine mit den Protokolldaten aus dem geschlosseneren Netzwerk und eine mit den Protokolldaten aus dem zugänglichen weiteren Netzwerk.

Die Erfindung ist außerdem gerichtet auf ein Netzwerk aufweisend einen Server mit einem Dienst, der dazu vorbereitet ist, Eingaben von einem Bedienerclient an den Server und daraus folgende Eingabeaktivitäten im Netzwerk zu protokollieren.

Um einen sicheren Betrieb des Netzwerks zu erreichen, umfasst das Netzwerk erfindungsgemäß zumindest einen Blockhost, der dazu vorbereitet ist, die Protokolldaten in einen Block einer Blockkette einzutragen und diesen an andere räumlich getrennte Blockhosts zu übertragen, und einen Prüfdienst, der dazu vorbereitet ist, die Protokolldaten auf Inhalte, die auf eine Manipulation des Netzwerks hindeuten, zu überprüfen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein System aus Netzwerken mit jeweils mehreren Hosts,
- FIG 2: eines der Netzwerke, in dem Eingaben von einem Bedienerclient protokolliert und die Protokolldaten an andere Hosts im Netzwerk verschickt werden,
- FIG 3: das Netzwerk aus FIG 2, in dem die Protokolldaten in eine Blockkette eingespeichert werden und die Blockkette auf mehrere Hosts verteilt wird und
- FIG 4: zwei der Netzwerke aus FIG 1 mit einem zusätzlichen Common-Bereich.

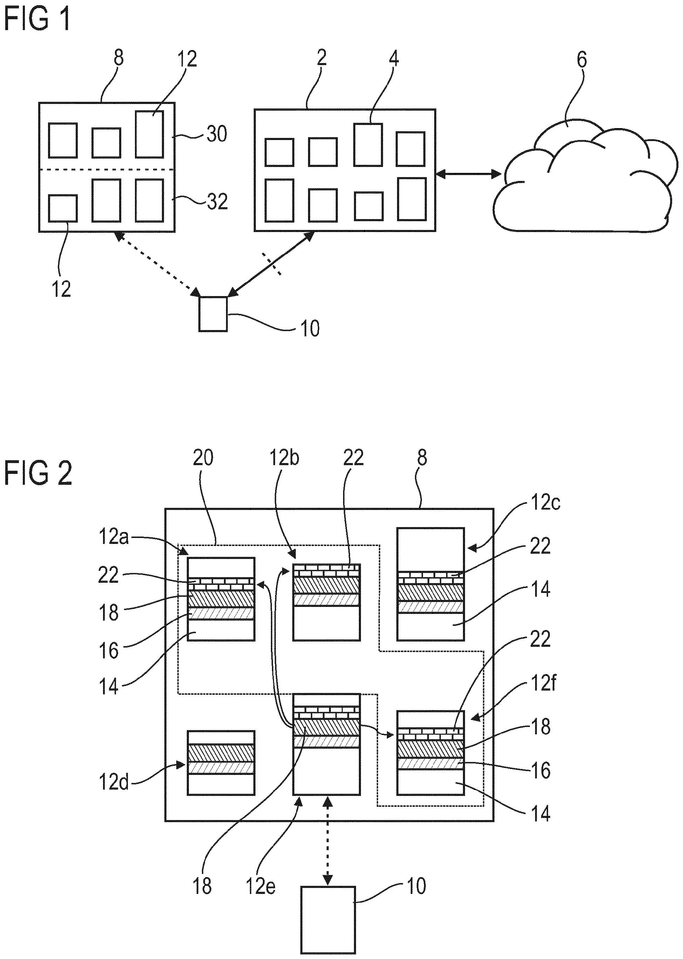

FIG 1 zeigt ein Intranet 2 eines Unternehmens, einer Organisation oder einer anderen Operationseinheit, beispielsweise eines militärischen Verbunds. Das Intranet 2 mit einer Vielzahl von Hosts 4 ist mit dem Internet 6 datentechnisch verbunden, das in FIG 1 nur schematisch angedeutet ist. Vom Intranet 2 getrennt ist ein weiteres Netzwerk 8 vorhanden, auf das mittels eines oder mehrerer Clients 10 zugegriffen werden kann. Der in FIG 1 dargestellte Client 10 kann sowohl auf das Intranet 2 als auch auf das abgeschottete Netzwerk 8 zugreifen, wobei bei einem Zugriff auf das Netzwerk 8 die Datenverbindung zum Intranet 2 gekappt ist, wie durch die in FIG 1 gestrichelte Linie, die den durchgezogenen Doppelpfeil durchstreicht, angedeutet ist. Auch das Netzwerk 8 ist mit einer Mehrzahl von Hosts 12 ausgestattet. Die Hosts 12 im Netzwerk 8 sind zueinander heterogene Einheiten. So sind Workstation, Personalcomputer und virtuelle Maschinen unter verschiedenen Betriebssystemen vorhanden, wie durch die verschiedene Größe der Blöcke in FIG 1 angedeutet ist.

Die beiden Netzwerke 2, 8, also das abgeschottete Netzwerk 8 und das aus dem Internet aus zugängliche Netzwerk 2, sind verbindungsfrei zueinander ausgeführt, wobei ein Read-Only-Kanal vom Internet zugänglichen Netzwerk 2 zum Netzwerk 8 vorhanden sein kann. Auch die Verbindung über den Client 10 ist dergestalt, dass eine durchgehende Verbindung vom Intranet 2 zum Netzwerk 8 nicht besteht.

Das Netzwerk 8 ist beispielsweise ein C2-Netzwerk, das gemäß des Sicherheitsstandards der US-Regierung, der im Orange Book beschrieben ist, geschützt ist. Das Netzwerk 8 verfügt über einen erhöhten Sicherheitsstandard für vertrauliche Daten in Computersystemen. So ist beispielsweise geblockt, dass Programme ohne Passwortabfrage gestartet werden können. Auch das Zugangsprozedere, beispielsweise vom Client 10 zu einem Host 12 des Netzwerks 8, wird protokolliert. Die einzelnen Benutzer des Netzwerks 8, also von einem Client 10 auf einen Host 12 des Netzwerks 8 zugreifende Benutzer, sind individuell identifizierbar und die Operationen der einzelnen Benutzer werden protokolliert. Die Protokolldaten sind vor nicht autorisierten Zugriffen geschützt.

FIG 2 zeigt das Netzwerk 8 mit beispielhaft gezeigten sechs Hosts 12. Die Hosts 12 sind mit gleichen Bezugsziffern und anderen Bezugsbuchstaben bezeichnet, wobei sie identisch zueinander oder mit Unterschieden zueinander ausgeführt sein können, zum Beispiel in Art und Funktion. Wird die Bezugsziffer alleine ohne einen Bezugsbuchstaben erwähnt, so sind alle entsprechenden Bauteile aller Ausführungsbeispiele angesprochen.

Die meisten der Hosts 12 haben einen Server 14, der im unteren Bereich der nur schematisch dargestellten Kästchen der Hosts 12 wiedergegeben sind. Ist ein Server 14 vorhanden, so verfügt der entsprechende Host 12 über einen Dienst 16, der ein Charakteristikum aus Daten, insbesondere veränderten Dateien, erzeugt. Greift der Client 10 auf eine Datei eines Servers 14 zu und verändert diese, so erzeugt der Dienst 16 aus der unveränderten und der veränderten Datei beispielsweise jeweils einen Hashwert und übergibt diesen an einen Dienst 18 zur Protokollierung von Eingaben des Bedienerclients 10 und daraus folgenden Aktivitäten des Servers 14. Dieser Dienst 18 ist so konfiguriert, dass die daraus folgenden Protokolldaten im Kernel des entsprechenden Hosts 12 erstellt werden.

Protokolliert werden unter anderem das Ein- und Ausloggen des Bedienerclients 10 aus einem Server 14 im Netzwerk 8, Logdaten zum Zugriff auf eine Datei auf einem Host 12 des Netzwerks 8, ein Verschieben oder ein Verändern einer solchen Datei, eine Eigenschaft einer Datei, beispielsweise ein Hashwert vor und nach einer Veränderung der Datei, vom Bedienerclient 10 ausgeführte Programme auf einem Server 14 und/oder ins Netzwerk 8 eingebrachte Daten, beispielsweise aus dem Intranet 2. Die Protokollierung erfolgt durch Syslog, wobei der übliche Syslogdienst im Dienst 18 für die Protokollierung so verändert wurde, dass die oben erwähnten Protokolldaten durch den Syslogdienst erstellt werden.

Greift ein Bedienerclient 10 auf das Netzwerk 8 zu, im Speziellen auf einen Server 14 auf einem Host 12 des Netzwerks 8, so protokolliert der Dienst 18 dieses Hosts 12 sowohl die Eingaben des Clients 10 an sich, beispielsweise die einzelnen Tastatureingaben, als auch die daraus resultierenden Veränderungen in Daten des Servers 14 und - falls vorhanden - Zugriffe des Servers 14 auf einen anderen Server 14, beispielsweise eines anderen Hosts 12. Auf diese Weise protokolliert jeder Host 12, der durch den Bedienerclienteingriff Datenveränderungen erfahren hat, die entsprechenden Veränderungen. Der Dienst 18 für die Protokollierung greift hierbei gegebenenfalls auf Daten des Dienstes 16 zurück, also beispielsweise auf einen oder mehrere Hashwerte von veränderten Dateien oder anderen Dateneinheiten.

Sobald Protokolldaten erstellt werden, leitet der Dienst 18 für die Protokollierung die Weiterleitung dieser Protokolldaten an andere Hosts 12 ein. Hiervon kann der Dienst 18 ausschließlich durch einen Eingriff abgehalten werden, wobei dieser Eingriff ebenfalls protokolliert und diese Protokolldaten nicht blockierbar SSL-verschlüsselt an andere Hosts 12 verschickt werden.

Ein solches Versenden von Protokolldaten ist beispielhaft in FIG 2 dargestellt. Es erfolgten Servereingriffe vom Bedienerclient 10 an den Server 14 des Hosts 12e, die vom Dienst 18 des Hosts 12e protokolliert wurde. Die Protokolldaten werden nun an eine Gruppe 20 von Hosts 12 geschickt, die in FIG 1 gepunktet dargestellt ist. Die Gruppe 20 umfasst die Hosts 12a, 12b und 12f. Die Protokolldaten werden jeweils an den Blockdienst 22 des betreffenden Hosts 12 der Gruppe 20 geschickt. Die Protokolldaten sind also unmittelbar nach deren Erzeugung auf mehreren anderen Hosts 12 vorhanden als dem Host 12e, in dem die Protokollierung stattgefunden hat.

Erfolgt ein Eingriff vom Bedienerclient 10 an einen anderen Server 14 des Netzwerks 8, so erfolgt im Prinzip das gleiche Prozedere, wobei jedoch die Gruppe 20, die diesem anderen Host 12 beziehungsweise Server 14 zugewiesen ist, eine andere sein kann, als die in FIG 2 dargestellte Gruppe 20, die dem Host 12e zugewiesen ist. So kann die entsprechende Gruppe 20 für jeden Host 12 unterschiedlich sein. Ebenfalls ist es möglich, dass die Gruppe 20 von Zeit zu Zeit automatisiert in ihrer Zusammensetzung umgestellt wird, die Protokolldaten vom Host 12e zu einem ersten Zeitpunkt also der Gruppe 20 zugeleitet werden und zu einem späteren Zeitpunkt einer Gruppe mit anderen Hosts 12. Ebenfalls ist es möglich, dass die Protokolldaten allen Hosts 12 des Netzwerks 8 oder allen so genannten Blockhosts 12 des Netzwerks 8 zugeleitet werden, wobei die Gruppe der Blockhosts 12 von vorneherein vordefiniert sein kann oder von Zeit zu Zeit oder von Host 12 zu Host 12 wechseln kann.

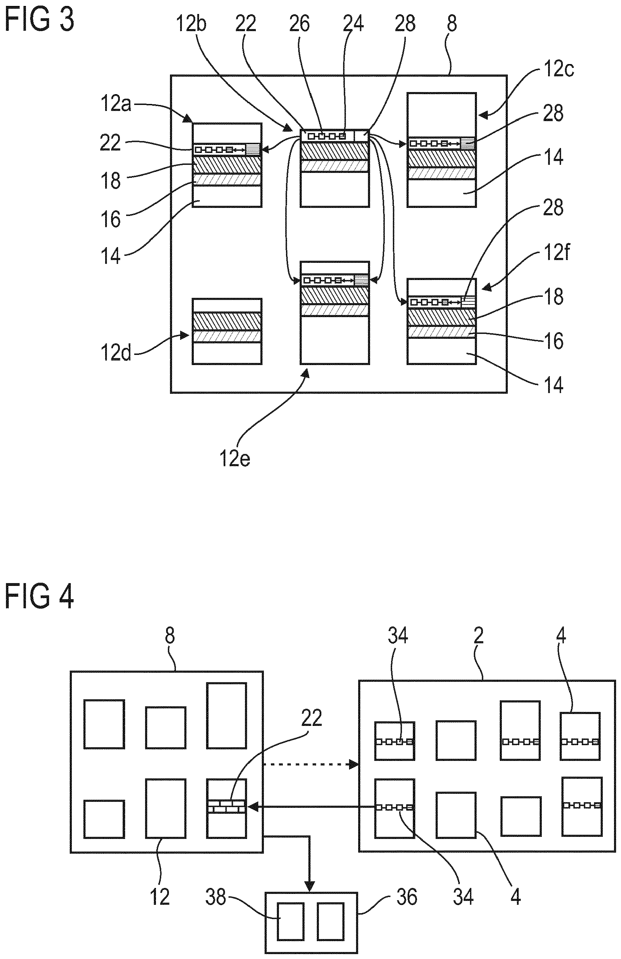

Im Laufe des Betriebs des Netzwerks 8 sammeln die Blockdienste 22 der räumlich getrennten Hosts 12 des Netzwerks 8 immer mehr Protokolldaten. Je nachdem, von welchem Host 12 die Protokolldaten stammen, können diese unterschiedlich auf die entsprechenden Blockdienste 22 der anderen Hosts 12 verteilt werden, sodass unterschiedlich viele Protokolldaten in den Blockdiensten 22 der Hosts 12 vorliegen können. Sobald in einem der Blockdienste 22 genügend Daten zum Füllen eines Datenblocks vorgegebener Größe vorliegen, werden die Protokolldaten von diesem Blockdienst 22 in einen Block 24 (siehe FIG 3) eingeschrieben, der Block 24 wird geschlossen und an eine Blockkette 26 angehängt. Der entsprechende Datenspeicher 28 des Blockdiensts 22 wird gelöscht, wie dies in FIG 3 im Host 12b schematisch dargestellt ist. In den Datenspeichern 28 der anderen Blockdienste 22 liegen die Protokolldaten noch vor, wie durch die Strichlierung dort schematisch dargestellt ist.

Nun wird von dem Block erzeugenden Hosts 12b die verlängerte Blockkette 26 an einige oder alle der übrigen Hosts 12 im Netzwerk 8 geschickt. Bei dem in FIG 3 dargestellten Ausführungsbeispiel wird die verlängerte Blockkette 26 an alle diejenigen Hosts 12 verschickt, die über einen Blockdienst 22 verfügen. Das sind im gezeigten Ausführungsbeispiel alle Hosts 12 außer dem Host 12d.

Jeder empfangende Blockdienst 22 ist zugleich ein Prüfdienst, der die mit der neuen Blockkette 26 erhaltenen Daten beziehungsweise mit dem neuen Block 24 erhaltenen Daten mit den Protokolldaten im eigenen Datenspeicher 28 vergleicht, wie in FIG 3 durch die kleinen Doppelpfeile angedeutet ist. Identische Protokolldaten werden aus dem jeweiligen Datenspeicher 28 gelöscht oder als nicht in einen neuen Block einzutragen markiert. Hierdurch soll vermieden werden, dass ein anderer Blockdienst 22 die gleichen Daten erneut in einen Block 24 einträgt und somit die sich ständig verlängernde Blockkette 26 mit zu vielen Daten und unnötigen redundanten Daten gespeist wird. Nun wird im weiteren Betriebsverlauf der jeweilige Datenspeicher 28 wieder mit hereinkommenden Protokolldaten gespeist, bis in einem der Datenspeicher 28 genügend Protokolldaten vorliegen, um den nächsten Block 24 zu füllen und an die Blockkette 26 anzuhängen und diese an die übrigen oder an ausgewählte Blockdienste 22 im Netzwerk 8 zu verschicken.

Zur Vermeidung von Datenmanipulation sind zwei Prüfschritte innerhalb des Netzwerks 8 implementiert. Die Prüfschritte können durch den Blockdienst 22 durchgeführt werden, der einen Prüfdienst bildet, oder durch einen separaten Prüfdienst im Blockhost 12. Der erste Prüfschritt kann anhand der Darstellung aus FIG 2 erläutert werden. Jeder Blockdienst 22 ist dazu vorbereitet, die eintreffenden Protokolldaten auf eine Manipulation der Protokolldaten hin zu untersuchen. Dies kann durch die Untersuchung der Protokolldaten an sich geschehen, die gegebenenfalls selbst Hinweise auf eine Manipulation beinhalten. Wird eine solche Manipulation erkannt oder ein ausreichend hoher Verdacht liegt vor, so wird vom auffindenden Prüfserver oder Blockdienst 22 eine Alarmaktion ausgelöst. Diese kann einen Hinweis an einen Systemadministrator beinhalten, das Herunterfahren des betroffenen Servers 14 beziehungsweise des betroffenen Hosts 12 veranlassen oder sogar das Herunterfahren mehrerer oder sämtlicher Hosts 12 des Netzwerks 8 auslösen. Ein erneutes Herauffahren des oder der entsprechenden Server 14 oder Hosts 12 kann nun nur durch einen Systemadministrator und zudem nur im gesicherten Modus erfolgen, der eine Manipulation von Protokolldaten ausschließt.

Ein zweiter Prüfschritt wird anhand der Darstellung aus FIG 3 erläutert. Durch den Vergleich der Protokolldaten in dem neu erhaltenen Block 24 beziehungsweise der neu erhaltenen Blockkette 26 und dem eigenen Datenspeicher 28 können Inkonsistenzen beziehungsweise Differenzen in den Protokolldaten festgestellt werden. So sind beispielsweise im Datenspeicher 28 des Hosts 12f Protokolldaten aus dem Host 12e vorhanden, die in der vom Host 12b erhaltenen Blockkette 26 nicht vorhanden sind. Diese Protokolldaten vom Host 12e hätten jedoch, da sie sowohl an den Host 12b als auch an den Host 12f versandt wurden, in der Blockkette 26 enthalten sein müssen. Es liegt also eine Diskrepanz zwischen den Daten aus dem Datenspeicher 28 und den Daten aus dem Block 24 beziehungsweise der Blockkette 26 vor, wie durch die andersartige Schraffur des Datenspeichers 28 im Host 12f in FIG 3 angedeutet ist. Der Blockdienst 22 des Hosts 12f gibt eine Alarmaktion aus, die beispielsweise wie oben beschrieben gestaltet sein kann.

Ein noch weitergehender Schutz von Protokolldaten und Blockkette 26 kann erreicht werden, wenn das Netzwerk 8 einen Systemadministratorenbereich 30 aufweist, auf den der Bedienerclient 10 keinen Zugriff hat und in dem einer, mehrere oder alle Blockhosts 12 angeordnet sind. Dies ist in FIG 1 durch eine gestrichelte Trennlinie im Netzwerk 8 dargestellt. Das Netzwerk 8 ist in zwei - oder mehr - Bereiche 30, 32 aufgeteilt, einen Eingabebereich 32, in dem die von den Bedienerclients 10 benötigten Serverhosts 12 angeordnet sind, und den Systemadministratorenbereich 30 mit Blockhosts 12, die generell frei von einer Verbindung zu allen Clients 10 sind, die von außerhalb des Netzwerks 8 Zugriff auf das Netzwerk 8 erhalten. Protokolldaten und/oder Blöcke 24 beziehungsweise die Blockkette 26 können vom zugänglichen Bereich 32 in den abgeschotteten Systemadministratorenbereich 30 transferiert werden und sind dort sicher vor Zugriffen von außen. Im Systemadministratorenbereich 30 finden die Prüfung auf Manipulation und Übereinstimmung der Blockketten 26 statt und eine Alarmaktion wird im Falle von Unstimmigkeiten ausgegeben.

Bei den bisher beschriebenen Ausführungsbeispielen sind die Blockhosts 12 im abgeschotteten Netzwerk 8 angeordnet. Es ist jedoch auch möglich, die Blockkette 26 ungeschützter abzulegen, beispielsweise in einer internetbasierten Cloud oder an einem anderen geografischen Standort als das Netzwerk 8. Eine solche Verteilung der Blockhosts auf beispielsweise mehrere Gebäude oder sogar mehrere Städte bietet den zusätzlichen Schutz einer deutlich erschwerten unerwünschten Übernahme aller Blockhosts durch einen Intruder.

Bei dem Ausführungsbeispiel aus FIG 4 kann das Netzwerk 8 ausgeführt sein, wie zu den vorangegangenen Figuren beschrieben. Das vom Internet aus zugängliche Netzwerk 2, beispielsweise als Intranet 2 ausgeführt, erzeugt hierbei jedoch ebenfalls eine Blockkette 34 aus Protokolldaten, die durch Eingaben und daraus folgende Eingabeaktivitäten sowohl von einem Bedienerclient 10 als auch aus dem Internet 6 erfolgend erzeugt wurden. Zum Erschweren der Manipulation der Blockkette 34 durch Übernahme von mehreren Hosts 4 im Netzwerk 2 wird die Blockkette 34 an das abgeschirmte Netzwerk 8 übertragen. Hierfür fragt das Netzwerk 8 beziehungsweise einer seiner Hosts 12 in vorgegebener Weise, beispielsweise in regelmäßigen Abständen am Netzwerk 2 an, ob eine veränderte Blockkette 34 vorliegt, wie durch den punktierten Pfeil vom Netzwerk 8 zum Intranet 2 dargestellt ist. Die Anfragen vom Netzwerk 8 an das Netzwerk 2 und das Übersenden einer Blockkette 34 vom Netzwerk 2 an das Netzwerk 8 werden innerhalb des Netzwerks 8 protokolliert, beispielsweise durch den Server 14 desjenigen Hosts 12, der angefragt beziehungsweise die Blockkette 34 erhalten hat.

Hat einer der Hosts 4 des Intranets 2 einen neuen Block 24 gefüllt, geschlossen und an die Blockkette 34 angehängt, so sendet beispielsweise dieser Host 4 auf die nächstfolgende Anfrage hin diese Blockkette 34 an einen Blockdienst 22 innerhalb des Netzwerks 8, wie durch den durchgezogenen Pfeil vom Netzwerk 2 ins Netzwerk 8 in FIG 4 angedeutet ist. Der Blockdienst 22 kann nun diese neu erhaltene Blockkette 34 innerhalb des Netzwerks 8 verteilen, beispielsweise an alle darin vorhandenen Blockdienste 22 oder eine Gruppe 20 daraus. Ein Eingriff zum Verändern von Daten aus dem Intranet 2 in das Netzwerk 8 ist hierbei nicht möglich. Ein solcher Eingriff müsste über einen Bedienerclient 10 erfolgen, dessen Aktivitäten jedoch innerhalb des Netzwerks 8 protokolliert werden.

Bei dem in FIG 4 gezeigten Ausführungsbeispiel ist ein zusätzlicher Bereich 36 mit Geräten dargestellt, beispielsweise ein Common-Bereich, der außerhalb des Netzwerks 8 liegt. Dieser hat zweckmäßigerweise keinen Zugriff auf das Netzwerk 8 und enthält beispielsweise einen oder mehrere Drucker 38. Sollen Daten aus dem abgeschirmten Netzwerk 8 ausgedruckt werden, beispielsweise Texte, Grafiken oder andere Dateidaten, so werden diese an den Bereich 36 geschickt, wie durch den abgeknickten Pfeil in FIG 4 angedeutet ist. Diese Aktion kann selbstständig vom Netzwerk 8 aus erfolgen, oder der Bereich 36 beziehungsweise eine Einheit darin fragt in regelmäßigen Zeitabständen im Netzwerk 8 an, ob auszudruckende Daten vorliegen.

In gleicher Weise ist dieser Vorgang auch in Verbindung mit dem Netzwerk 2 möglich. Daten aus dem Netzwerk 2 werden in den Bereich 36 geschickt, der dann ein Common-Bereich ist, und dort auf einem Drucker 38 ausgedruckt. Um einen unbefugten Übergriff auf den Common-Bereich 36 aus dem Netzwerk 2 zu vermeiden, ist es hier sinnvoll, wenn Daten aus dem Netzwerk 2 an den Common-Bereich 36 nur auf Anfrage aus dem Common-Bereich 36 hin geschickt werden.

Anfragen aus dem Bereich 36 an das Netzwerk 8 und das Verschicken von Daten aus dem Netzwerk 8 in den Bereich 36 sowie ein Hashwert von den verschickten Daten werden im Netzwerk 8 protokolliert. Bei Interaktion zwischen dem Netzwerk 2 und dem Bereich 36 werden die entsprechenden Protokolldaten im Netzwerk 2 erzeugt und - wie beschrieben - in eine Blockkette 34 eingefügt.

### Bezugszeichenliste

- 2: Intranet
- 4: Host
- 6: Internet
- 8: Netzwerk
- 10: Client
- 12: Host
- 14: Server
- 16: Dienst für Hashwert
- 18: Dienst für Protokolle
- 20: Gruppe
- 22: Blockdienst
- 24: Block
- 26: Blockkette
- 28: Datenspeicher
- 30: Systemadministratorenbereich
- 32: Eingabebereich
- 34: Blockkette
- 36: Bereich
- 38: Drucker

## Patentansprüche

1. Verfahren zum Betreiben eines Netzwerks (2, 8) mit mehreren Servern (14), bei dem Eingaben von einem Bedienerclient (10) an einen der Server (14) und daraus folgende Eingabeaktivitäten im Netzwerk (2, 8) protokolliert werden, die Protokolldaten in eine Blockkette (26, 34) eingetragen werden, die auf mehrere räumlich getrennte Blockhosts (4, 12) des Netzwerks (2, 8) verteilt wird, und die Protokolldaten auf Inhalte, die auf eine Manipulation des Netzwerks (2, 8) hindeuten, überprüft werden.

2. Verfahren nach Anspruch 1,
**dadurch gekennzeichnet,**
**dass** die Protokolldaten eine oder mehrere der folgenden Daten umfassen:
Logdaten zum Ein- und Ausloggen des Bedienerclients (10), Logdaten zum Zugriff auf eine Datei, zum Verschieben einer Datei oder Verändern einer Datei, Eigenschaft einer Datei, Eingaben des Bedienerclients (10) während seiner Tätigkeit im Netzwerk (2, 8), ausgeführte Programme, ins Netzwerk (2, 8) eingebrachte Daten, Hashwerte von Daten.

3. Verfahren nach Anspruch 1 oder 2,
**dadurch gekennzeichnet,**
**dass** die Protokollierung durch Syslog erfolgt.

4. Verfahren nach einem der vorhergehenden Ansprüche,
**dadurch gekennzeichnet,**
**dass** die Protokollierung im Kernel des Serverhosts (4, 12) implementiert ist.

5. Verfahren nach einem der vorhergehenden Ansprüche,
**dadurch gekennzeichnet,**
**dass** die Protokolldaten unmittelbar nach der Eingabe an den Blockhost (4, 12) geschickt werden.

6. Verfahren nach einem der vorhergehenden Ansprüche,
**dadurch gekennzeichnet,**
**dass** die Protokolldaten ausschließlich auf einem anderen Host (4, 12) in einen Block (24) eingefügt werden, als der Host (12), in dem die Protokolldaten erzeugt wurden.

7. Verfahren nach einem der vorhergehenden Ansprüche,
**dadurch gekennzeichnet,**
**dass** die Protokolldaten vom Server (14) an eine Gruppe (20) aus mehreren Blockhosts (12) verschickt werden.

8. Verfahren nach Anspruch 7,
**dadurch gekennzeichnet,**
**dass** die Blockhosts (12) der Gruppe (20) zueinander heterogene Einheiten sind.

9. Verfahren nach Anspruch 7 oder 8,
**dadurch gekennzeichnet,**
**dass** die Zusammensetzung der Gruppe (20) verändert wird.

10. Verfahren nach Anspruch 9,
**dadurch gekennzeichnet,**
**dass** die Zusammensetzung zufällig zusammengestellt wird.

11. Verfahren nach einem der vorhergehenden Ansprüche,
**dadurch gekennzeichnet,**
**dass** mehrere Server (14) des Netzwerks (2, 8) jeweils ihre Protokolldaten jeweils an eine Gruppe (20) mit mehreren Blockhosts (12) senden und die Gruppen (20) von Server (14) zu Server (14) verschieden sind.

12. Verfahren nach einem der vorhergehenden Ansprüche,
**dadurch gekennzeichnet,**
**dass** ein Blockhost (12) einen Block (24) schließt und an die Blockkette (26) anhängt, sobald ihm genügend Protokolldaten zum Füllen des Blocks (24) vorliegen, die in der aktuellen Blockkette (26) noch nicht enthalten sind.

13. Verfahren nach einem der vorhergehenden Ansprüche,
**dadurch gekennzeichnet,**
**dass** das Netzwerk (8) einen Eingabebereich (32) mit Hosts aufweist, auf die der Bediener Zugriff hat, und einen Systemadministratorenbereich (30), auf den ausschließlich Systemadministratoren Zugriff haben, und zumindest einer der Blockhosts (12) im Systemadministratorenbereich (30) liegt.

14. Verfahren nach einem der vorhergehenden Ansprüche,
**dadurch gekennzeichnet,**
**dass** das Netzwerk (8) mit zumindest der Sicherheitsstufe C2 ausgestattet ist und über eine Datenkopplung mit einem weiteren, vom Internet aus zugänglichen Netzwerk (2) verbunden ist und Blöcke mit Protokolldaten aus dem weiteren Netzwerk (2) in das C2-Netzwerk (8) übertragen werden.

15. Netzwerk (2, 8) aufweisend einen Server (14) mit einem Dienst (18), der dazu vorbereitet ist, Eingaben von einem Bedienerclient (10) an den Server (14) und daraus folgende Eingabeaktivitäten im Netzwerk (2, 8) zu protokollieren, zumindest einen Blockhost (12), der dazu vorbereitet ist, die Protokolldaten in einen Block (24) einer Blockkette (26) einzutragen und diesen an andere räumlich getrennte Blockhosts (12) zu übertragen, und einen Prüfdienst, der dazu vorbereitet ist, Protokolldaten auf Inhalte, die auf eine Manipulation des Netzwerks (2, 8) hindeuten, zu überprüfen.
